# EUROPÄISCHE PATENTSCHRIFT

(11) **EP 3 613 124 B1**
(45) Veröffentlichungstag und Bekanntmachung des Hinweises auf die Patenterteilung: **30.08.2023**
(21) Anmeldenummer: 18719511.0
(22) Anmeldetag: 18.04.2018
(51) Int. Cl.: H02J 9/06, H02H 3/04, H02H 9/00

(54) **UNTERBRECHUNGSFREIE STROMVERSORGUNG**
UNINTERRUPTIBLE POWER SUPPLY
ALIMENTATION SANS INTERRUPTION

(30) Priorität: 21.04.2017 DE 102017108516
(43) Veröffentlichungstag der Anmeldung: 26.02.2020
(73) Patentinhaber: Phoenix Contact GmbH & Co KG, 32825 Blomberg (DE)
(72) Erfinder: KNOOP, Daniel, 33102 Paderborn (DE); MARSCHKE, Irene, 59494 Soest (DE)
(74) Vertreter: Patentship Patentanwaltsgesellschaft mbH
(86) Internationale Anmeldenummer: PCT/EP2018/059912
(87) Internationale Veröffentlichungsnummer: WO 2018/192977

(56) Entgegenhaltungen:
- WO-A1-2006/005175
- WO-A1-2016/125712
- US-A1- 2015 069 842

## Beschreibung

Die vorliegende Offenbarung betrifft eine unterbrechungsfreie Stromversorgung (USV) zur Versorgung eines elektrischen Verbrauchers mit elektrischer Energie.

In einer herkömmlichen USV wird der elektrische Verbraucher über einen Versorgungsnetzanschluss mit elektrischer Energie versorgt und bei Ausfall des Versorgungsnetzanschlusses wird der elektrische Verbraucher beispielsweise über einen Energiespeicher mit elektrischer Energie versorgt. Durch den elektrischen Verbraucher kann jedoch ein elektrischer Strom fließen, dessen Stromstärke oberhalb eines Stromstärkegrenzwertes der USV liegt. Eine herkömmliche USV unterbricht in diesem Fall üblicherweise die Versorgung des elektrischen Verbrauchers mit elektrischer Energie, um eine Beschädigung der USV und/oder des Verbrauchers zu verhindern. Eine derartige Unterbrechung der Energieversorgung ist jedoch nicht wünschenswert.

Die Druckschrift WO 2006/005175 A1 offenbart eine adaptive Stromsteuerung für ein Brennstoffzellensystem. Über eine adaptive Stromsteuerung ist eine Brennstoffzelle mit einem Verbraucher verbunden. Die Stromsteuerung weist einen Strombegrenzer auf, der zwei parallele Strompfade umfasst. In dem einen Strompfad ist ein strombegrenzender Widerstand in Reihe mit einer Diode geschaltet. Der zweite Strompfad enthält einen Schalter, der von einem Prozessor steuerbar ist. Wenn der Prozessor feststellt, dass der Strombedarf verändert ist, wird ein Steuersignal ausgegeben, das den Schalter öffnet, um den Ausgangsstrom über den strombegrenzenden Widerstand und die Diode zu leiten. Die Druckschrift US 2015/069842 A1 offenbart ein Leistungs-Umrichter-System mit einer externen Leistungsquelle um einer Last Leistung bereitzustellen. Das Leistungs-Umrichter-System umfasst eine Steuereinheit, die einen Hauptschalter schaltet, wenn eine externe Leistungsquelle unnormal Leistung bereitstellt. Ferner umfasst das Leistungs-Umrichter-System eine wiederaufladbare Batterie als Hilfsleistungsversorgung, die von der Hauptleistungsquelle geladen werden kann.

Die Druckschrift WO 2016/125712 A1 offenbart eine Stromversorgungseinrichtung mit einem Gleichstromwandler.

Es ist die Aufgabe der vorliegenden Offenbarung, eine effiziente USV zu schaffen, bei welcher die Versorgung des Verbrauchers mit elektrischer Energie nicht unterbrochen wird.

Diese Aufgabe wird erfindungsgemäß durch die Merkmale des unabhängigen Anspruchs gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass die obige Aufgabe durch eine USV, welche einen Spannungswandler aufweist, über welchen ein an die USV angeschlossener elektrischer Verbraucher mit elektrischer Energie versorgt werden kann, gelöst werden kann, wobei der Spannungswandler ausgebildet ist, die dem elektrischen Verbraucher bereitgestellte elektrische Spannung zu ändern und/oder den elektrischen Strom, welcher durch den elektrischen Verbraucher fließt zu begrenzen.

Gemäß einem ersten Aspekt betrifft die Offenbarung eine USV für einen elektrischen Verbraucher, mit einem ersten Strompfad und einem zweiten Strompfad, welche ausgebildet sind, den elektrischen Verbraucher mit elektrischer Energie zu versorgen, einem ersten Schalter, welcher ausgebildet ist, den ersten Strompfad zu unterbrechen, einem Spannungswandler zur Begrenzung einer Stromstärke eines elektrischen Stroms, wobei der Spannungswandler in dem zweiten Strompfad angeordnet ist, und einer Steuerung, welche ausgebildet ist, bei Erreichung eines Stromstärkegrenzwertes des elektrischen Stroms in dem ersten Strompfad den ersten Schalter zu öffnen, um den ersten Strompfad elektrisch zu unterbrechen und den elektrischen Strom zur Strombegrenzung über den Spannungswandler zu führen.

Der an die USV angeschlossene elektrische Verbraucher kann während des Betriebs die Stromstärke des durch den elektrischen Verbraucher fließenden elektrischen Stroms ändern. Die Stromstärke des elektrischen Stroms kann insbesondere durch einen Kurzschluss in dem elektrischen Verbraucher erhöht sein. Bei einer gleichbleibenden elektrischen Spannung an dem elektrischen Verbraucher steigt dadurch die elektrische Leistung, welche von der USV an den elektrischen Verbraucher geliefert wird. Bei Überschreiten des Stromstärkegrenzwertes kann eine elektrische Energieversorgung des Verbrauchers mit reduzierter elektrischer Leistung realisiert sein, indem von dem ersten Strompfad zu dem zweiten Strompfad geschaltet wird.

Der Spannungswandler kann den durch den elektrischen Verbraucher fließenden Strom begrenzen, die Versorgung des elektrischen Verbrauchers mit elektrischer Energie wird jedoch auch bei Überschreiten des Stromstärkegrenzwertes aufrechterhalten. Der Spannungswandler passt die Stromstärke des elektrischen Stroms an, sodass der elektrische Strom mit einer Stromstärke unterhalb des Stromstärkegrenzwertes durch den zweiten Strompfad und/oder den elektrischen Verbraucher fließen kann.

In einer Ausführungsform ist der erste Schalter in dem ersten Strompfad angeordnet.

Dadurch wird der Vorteil erreicht, dass bei einem Öffnen des ersten Schalters der erste Strompfad unterbrochen werden kann und ein elektrischer Strom über den Spannungswandler in dem zweiten Strompfad zu dem elektrischen Verbraucher fließen kann. In dieser Ausführungsform kann der Schalter eine geöffnete und eine geschlossene Schalterstellung aufweisen.

Der erste Schalter kann dem ersten und zweiten Strompfad vorgeschaltet sein und insbesondere zwischen dem ersten und dem zweiten Strompfad umschalten. Der erste Schalter kann als ein Y-Umschalter ausgebildet sein, welcher beispielsweise dauerhaft mit der Energiequelle verbunden sein kann und in einer ersten Schalterstellung eine elektrische Verbindung zwischen der Energiequelle und dem ersten Strompfad realisiert und in einer zweiten Schalterstellung eine elektrische Verbindung zwischen der Energiequelle und dem zweiten Strompfad realisiert.

In einer Ausführungsform sind der erste Strompfad und der zweite Strompfad parallel geschaltet.

Dadurch wird der Vorteil erreicht, dass die Versorgung des elektrischen Verbrauchers mit elektrischer Energie entweder über den ersten Strompfad und/oder über den zweiten Strompfad erfolgen kann. Das Verhältnis der Stromstärke des elektrischen Stroms zwischen dem ersten Strompfad und dem zweiten Strompfad kann durch das Verhältnis des elektrischen Widerstands des ersten Strompfades zu dem elektrischen Widerstand des zweiten Strompfades bestimmt sein.

In einer Ausführungsform ist die Steuerung ausgebildet, den ersten Schalter bei Unterschreitung des Stromstärkegrenzwertes zu schließen, um den ersten Strompfad in die Energieversorgung einzubinden.

Dadurch wird der Vorteil erreicht, dass der zweite Strompfad und somit der Spannungswandler nur an der Energieversorgung eines elektrischen Verbrauchers beteiligt sein können, wenn die Stromstärke des elektrischen Stroms den Stromstärkegrenzwert überschreitet. Bei einem Unterschreiten des Stromstärkegrenzwertes kann die elektrische Energieversorgung über den ersten Strompfad realisiert sein.

In einer Ausführungsform ist der Spannungswandler ein Gleichspannungswandler.

Die USV kann insbesondere ausgebildet sein den elektrischen Verbraucher mit einer Gleichspannung zu versorgen, sodass der Gleichspannungswandler die Stromstärke eines elektrischen Gleichspannungsstroms reduzieren kann.

Der Spannungswandler ist ein Tiefsetzsteller zur Spannungsreduktion.

Ein Tiefsetzsteller kann eine ihm zugeführte elektrische Spannung auf einen niedrigeren Spannungswert reduzieren, wobei die reduzierte Spannung dem elektrischen Verbraucher bereitgestellt sein kann. Durch das Reduzieren der elektrischen Spannung kann auch der elektrische Strom, welcher durch den elektrischen Verbraucher fließt, reduziert sein.

Der erste Schalter ist elektrisch parallel zu dem Spannungswandler angeordnet.

Ist der erste Schalter geschlossen, kann ein elektrischer Strom beispielsweise von einer Energiequelle über den ersten Schalter direkt zu dem elektrischen Verbraucher fließen. Dies erreicht den Vorteil, dass für eine Versorgung des elektrischen Verbrauchers mit elektrischer Energie ohne eine Begrenzung der Stromstärke des zu dem elektrischen Verbraucher fließenden elektrischen Stroms ohne weitere elektrische Bauteile, insbesondere ohne den Spannungswandler erfolgen kann. Dadurch können Verluste bei der Übertragung von elektrischer Energie durch die USV vorteilhaft reduziert sein.

Ist der erste Schalter geöffnet, kann der elektrisch parallel angeordnete Spannungswandler im Vergleich zu dem geöffneten ersten Schalter einen geringeren elektrischen Widerstand aufweisen, sodass ein elektrischer Strom beispielsweise von einer Energiequelle über den Spannungswandler zu dem elektrischen Verbraucher fließen kann. Dies erreicht den Vorteil, dass der elektrische Strom oder die elektrische Spannung, welche dem elektrischen Verbraucher bereitgestellt sein kann, durch den Spannungswandler geändert werden kann. Insbesondere kann die Stromstärke des elektrischen Stroms angepasst werden.

In einer Ausführungsform umfasst der erste Schalter einen oder eine Mehrzahl von MetallOxid-Feldeffekt-Halbleiter-Feldeffekttransistor (MOSFET) oder mindestens ein Relais.

Der erste Schalter kann durch einen Transistor, insbesondere einen MOSFET, gebildet sein, welcher einen schnellen und effizienten Schaltvorgang ermöglicht. Der erste Strompfad kann mit dem Transistor elektrisch getrennt werden ohne eine physische Auftrennung des ersten Strompfades zu bewirken. Dies erreicht den Vorteil, dass der Schalter vorteilhaft mit einer anliegenden elektrischen Spannung geschaltet werden kann. Der Transistor kann gegenüber einem mechanischen und/oder elektro-mechanischem Schalter eine erhöhte Lebensdauer und Schaltgeschwindigkeit aufweisen.

Der erste Schalter kann durch ein elektro-mechanisches Relais gebildet sein, welches den ersten Strompfad physisch trennt. Das elektromechanische Relais kann gegenüber einem Transistor den Vorteil eines geringeren Kontaktübergangswiderstands, eines höheren Isolationswiderstands und/oder einer höheren Einschaltleistung aufweisen.

Der erste Schalter kann durch ein Halbleiterrelais gebildet sein, welches mittels eines Transistors, Thyristors und/oder Triacs realisiert sein kann. Durch die Abwesenheit beweglicher mechanischer Bauteile kann das Halbleiterrelais gegenüber dem elektromechanischen Relais eine höhere Lebensdauer aufweisen und/oder für eine hohe Anzahl an Schaltvorgängen geeignet sein. Ein Halbleiterrelais kann beispielsweise eine Wechselspannung während des Nulldurchgangs schalten.

In einer Ausführungsform weist die USV zumindest eine Energiequelle, insbesondere einen Versorgungsnetzanschluss und/oder einen Energiespeicher, zur elektrischen Energieversorgung des Verbrauchers auf, wobei der erste Strompfad und der zweite Strompfad mit der Energieversorgung, insbesondere mittels des ersten Schalters, verbindbar oder verbunden sind.

Eine USV kann eine kontinuierliche Versorgung eines elektrischen Verbrauchers mit elektrischer Energie realisieren. Die USV kann dazu elektrische Energie aus einem Versorgungsnetzanschluss beziehen und an den elektrischen Verbraucher weiterleiten. Weiterhin kann die USV ausgebildet sein, zu erfassen, ob eine Energieversorgung des elektrischen Verbrauchers über den Versorgungsnetzanschluss möglich ist. Falls eine Energieversorgung über den Versorgungsnetzanschluss nicht möglich sein sollte, kann die USV den elektrischen Verbraucher über eine alternative Energiequelle mit elektrischer Energie versorgen. Eine solche alternative Energiequelle kann beispielsweise ein Energiespeicher, insbesondere ein USV-interner Energiespeicher, sein. Das Umschalten der Energieversorgung von dem Versorgungsnetzanschluss zu dem Energiespeicher kann insbesondere unterbrechungsfrei realisiert sein.

In einer Ausführungsform umfasst die USV einen dritten Strompfad und einen vierten Strompfad, welche ausgebildet sind den ersten Strompfad und den zweiten Strompfad mit elektrischer Energie von dem Energiespeicher zu versorgen, wobei der dritte Strompfad und der vierte Strompfad dem ersten Strompfad und dem zweiten Strompfad elektrisch vorgeschaltet sind, wobei der Energiespeicher dem dritten Strompfad und dem vierten Strompfad elektrisch vorgeschaltet ist, einen weiteren Spannungswandler zur Begrenzung einer Stromstärke eines elektrischen Stroms, wobei der weitere Spannungswandler in dem vierten Strompfad angeordnet ist, und einen zweiten Schalter, welcher ausgebildet ist, den dritten Strompfad zu schließen.

Der weitere Spannungswandler in dem vierten Strompfad kann insbesondere geeignet sein dem Energiespeicher eine angepasste Spannung bereitzustellen, um den Energiespeicher mit elektrischer Energie aufzuladen. Diese elektrische Energie kann beispielsweise durch den Versorgungsnetzanschluss bereitgestellt sein. Wird der elektrische Verbraucher nicht durch den Energiespeicher mit elektrischer Energie versorgt, kann der Energiespeicher durch den Versorgungsnetzanschluss mit elektrischer Energie aufgeladen werden. Der dritte Strompfad kann während eines Aufladens des Energiespeichers durch den zweiten Schalter geöffnet sein, sodass kein elektrischer Strom über den dritten Strompfad fließen kann. Der Energiespeicher kann ausgebildet sein, gleichzeitig über den Versorgungsnetzanschluss mit elektrischer Energie geladen zu werden und den elektrischen Verbraucher mit elektrischer Energie zu versorgen.

Um den elektrischen Verbraucher mit elektrischer Energie von dem Energiespeicher zu versorgen, kann der dritte Strompfad durch den zweiten Schalter geschlossen werden, sodass ein elektrischer Strom über den dritten Strompfad fließen kann. Dadurch wird der Vorteil erreicht, dass die Versorgung des elektrischen Verbrauchers mit elektrischer Energie nicht über den vierten Strompfad mit dem weiteren Spannungswandler erfolgt, sodass elektrische Verlustleistungen, welche in dem Spannungswandler auftreten können vorteilhaft reduziert werden können.

Der weitere Spannungswandler kann durch die Steuerung derart gesteuert werden, dass das Aufladen des Energiespeichers mit elektrischer Energie vorteilhaft, insbesondere den Energiespeicher schonend, erfolgt. Dadurch wird der Vorteil erreicht, dass die Lebensdauer des Energiespeichers verlängert werden kann und/oder die Speicherkapazität des Energiespeichers erhalten werden kann.

In einer Ausführungsform ist der weitere Spannungswandler elektrisch parallel zu dem zweiten Schalter angeordnet.

Ist der zweite Schalter geschlossen, kann ein elektrischer Strom von dem Energiespeicher über den ersten Schalter und/oder den Spannungswandler zu dem elektrischen Verbraucher fließen. Dies erreicht den Vorteil, dass für eine Versorgung des elektrischen Verbrauchers mit elektrischer Energie ohne weitere elektrische Bauteile, insbesondere ohne den Spannungswandler und/oder den weiteren Spannungswandler realisiert sein kann. Dadurch können Verluste bei der Übertragung von elektrischer Energie durch die USV vorteilhaft reduziert sein.

Ist der zweite Schalter geöffnet, kann der elektrisch parallel angeordnete weitere Spannungswandler im Vergleich zu dem geöffneten zweiten Schalter einen geringeren elektrischen Widerstand aufweisen, sodass ein elektrischer Strom von dem Versorgungsnetzanschluss über den weiteren Spannungswandler zu dem Energiespeicher fließen kann. Dies erreicht den Vorteil, dass der elektrische Strom und/oder die elektrische Spannung, welche dem Energiespeicher durch den Versorgungsnetzanschluss bereitgestellt sein kann, durch den weiteren Spannungswandler geändert werden kann. Insbesondere kann die elektrische Stromstärke und/oder der Betrag der elektrischen Spannung der zu dem Energiespeicher übertragenen elektrischen Energie angepasst werden.

In einer Ausführungsform ist die Steuerung ausgebildet, bei Erreichung eines Entladegrenzwertes der elektrischen Energie des Energiespeichers den weiteren Spannungswandler zu steuern, um den Energiespeicher über den weiteren Spannungswandler mit elektrischer Energie zu versorgen.

Der Entladegrenzwert kann beispielsweise über die Ausgangsspannung des Energiespeichers bestimmt sein. Die Steuerung kann das Aufladen des Energiespeichers steuern, um die zur Versorgung des elektrischen Verbrauchers mit in dem Energiespeicher gespeicherter elektrischer Energie zu maximieren und/oder die Energiespeicherkapazität des Energiespeichers zu erhalten.

In einer Ausführungsform ist die Steuerung ausgebildet, den zweiten Schalter zu schließen, um elektrischen Strom über den dritten Strompfad zu dem elektrischen Verbraucher zu leiten.

Durch Schließen des zweiten Schalters kann elektrische Energie von dem Energiespeicher zu dem ersten und/oder zweiten Strompfad transportiert werden und über den ersten und/oder zweiten Strompfad zu dem elektrischen Verbraucher transportiert werden.

In einer Ausführungsform weist die USV einen dritten Schalter auf, welcher den Strompfaden elektrisch vorgeschaltet ist, um die Strompfade schaltbar mit einer Energiequelle zu verbinden.

Der dritte Schalter kann ausgebildet sein den Versorgungsnetzanschluss mit den Strompfaden zu verbinden. Insbesondere kann der dritte Schalter dauerhaft mit dem Spannungswandler und/oder dem weiteren Spannungswandler elektrisch verbunden sein. Der dritte Schalter kann in einer Schalterstellung die Strompfade von dem Versorgungsnetzanschluss elektrisch trennen, wobei eine Versorgung des elektrischen Verbrauchers mit elektrischer Energie von dem Energiespeicher erfolgen kann.

In einer Ausführungsform weist die USV ferner ein Strommessgerät zur Messung der Stromstärke des elektrischen Stroms auf.

Ein Messwert der Stromstärke des elektrischen Stroms, welcher von dem Strommessgerät erfasst sein kann, kann der Steuerung zugeführt sein. Die Steuerung kann ausgebildet sein diesen Messwert mit einem Stromstärkegrenzwert zu vergleichen und insbesondere bei Überschreiten des Stromstärkegrenzwertes durch den Messwert den ersten Schalter und/oder den Spannungswandler zu steuern, um die Stromstärke des elektrischen Stroms zu reduzieren. Dies kann durch Öffnen des ersten Schalters realisiert sein, sodass elektrische Energie von einer Energiequelle über den Spannungswandler transportiert wird, welcher die Stromstärke des elektrischen Stroms vorteilhaft reduzieren kann. Dadurch kein ein fortlaufender Betrieb der USV realisiert sein, da der Stromstärkegrenzwert nicht dauerhaft überschritten wird.

In einer Ausführungsform ist das Strommessgerät dem ersten Schalter elektrisch nachgeschaltet oder vorgeschaltet.

Vorteilhafterweise kann das Strommessgerät in einen Strompfad eingebunden sein, welcher in jedem Betriebszustand der USV an der Energieversorgung des elektrischen Verbrauchers mit elektrischer Energie beteiligt ist. Das Strommessgerät kann elektrisch in Serie zu dem ersten, zweiten, dritten und/oder vierten Strompfad geschaltet sein.

Weitere Ausführungsbeispiele werden Bezug nehmend auf die beiliegenden Figuren erläutert. Es zeigen:
- Fig. 1: eine unterbrechungsfreie Stromversorgung gemäß einer Ausführungsform;
- Fig. 2: einen Spannungswandler gemäß einer Ausführungsform

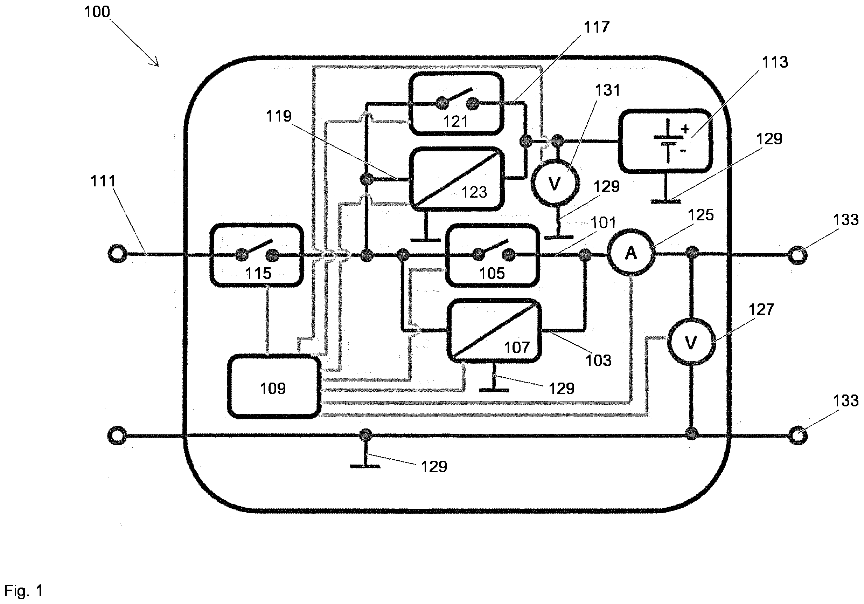

Fig. 1 zeigt eine schematische Darstellung der USV 100 für einen elektrischen Verbraucher, mit einem ersten Strompfad 101 und einem zweiten Strompfad 103, welche ausgebildet sind den elektrischen Verbraucher mit elektrischer Energie zu versorgen, einem ersten Schalter 105, welcher ausgebildet ist, den ersten Strompfad 101 zu unterbrechen, einem Spannungswandler 107 zur Begrenzung einer Stromstärke eines elektrischen Stroms, wobei der Spannungswandler 107 in dem zweiten Strompfad 103 angeordnet ist und einer Steuerung 109, welche ausgebildet ist, bei Erreichung eines Stromstärkegrenzwertes des elektrischen Stroms in dem ersten Strompfad 101 den ersten Schalter 105 zu öffnen, um den ersten Strompfad 101 elektrisch zu unterbrechen und den elektrischen Strom zur Strombegrenzung über den Spannungswandler 107 zu führen.

Eine erste funktionale Gruppe bestehend aus dem Spannungswandler 107, dem ersten Schalter 105, dem Strommessgerät 125, dem ersten Strompfad 101, dem zweiten Strompfad 103 und einem Spannungsmessgerät 127 kann für die Versorgung des elektrischen Verbrauchers mit elektrischer Energie ausgebildet sein. Die Versorgung des elektrischen Verbrauchers mit elektrischer Energie kann in einer ersten Schalterstellung des ersten Schalters 105 über den ersten Schalter 105 und den ersten Strompfad 101 und in einer zweiten Schalterstellung des ersten Schalters 105 über den Spannungswandler 107 und den zweiten Strompfad 103 erfolgen. Das Strommessgerät 125 ist ausgebildet den dem elektrischen Verbraucher zugeführten elektrischen Strom zu messen und das Spannungsmessgerät 127 ist ausgebildet die dem elektrischen Verbraucher zugeführte elektrische Spannung zu messen. Der Stromstärkemesswert des Strommessgeräts 125 und der Spannungsmesswert des Spannungsmessgeräts 127 können der Steuerung 109 zugeführt sein, sodass der Steuerung 109 eine Information über die dem elektrischen Verbraucher bereitgestellte elektrische Leistung zugeführt sein kann. Diese erste funktionale Gruppe kann über den dritten Schalter 115 mit einer Energiequelle, insbesondere einem Versorgungsnetzanschluss 111 verbunden sein.

Die Versorgung des elektrischen Verbrauchers mit elektrischer Energie durch den Versorgungsnetzanschluss 111 kann durch eine zweite funktionale Gruppe ergänzt sein, welche den zweiten Schalter 121, den weiteren Spannungswandler 123, den dritten Strompfad 117, den vierten Strompfad 119, ein weiteres Spannungsmessgerät 131 und den Energiespeicher 113 umfasst. Ist die elektrische Verbindung zu dem Versorgungsnetzanschluss 111, insbesondere durch den dritten Schalter 115 in einer offenen Position, unterbrochen, kann der elektrische Verbraucher mit elektrischer Energie, welche in dem Energiespeicher 113 gespeichert ist, versorgt werden. Der zweite Schalter kann geschlossen sein, sodass eine elektrische Verbindung zwischen dem Energiespeicher 113 über den dritten Strompfad und den ersten und/oder zweiten Strompfad zu dem elektrischen Verbraucher realisiert sein kann.

Alle Elemente der USV 100, ausgeschlossen der Energiespeicher 113 und der Versorgungsnetzschluss 111, können von der Steuerung 109 gesteuert werden und sind mit dieser über Steuerleitungen elektrisch verbunden.

Die elektrische Verbindung mit dem elektrischen Verbraucher kann durch zwei elektrische Kontakte 133 gebildet sein, wobei einer der zwei elektrischen Kontakte 133 ein Massepotential aufweisen kann. Die Anschlüsse mit elektrischem Bezugspotential 129 und einer der zwei elektrischen Kontakte 133 weisen ein gemeinsames Massepotential auf. Das Spannungsmessgerät 119 und das weitere Spannungsmessgerät 131 messen eine elektrische Spannung in Bezug auf das zuvor genannte Massepotential. Die elektrische Spannung des Versorgungsnetzanschlusses 111 ist ebenso auf dieses Massepotential bezogen.

Der erste, zweite und dritte Schalter 105, 121, 115 können sperren, sodass die elektrische Verbindung über den jeweiligen Schalter 105, 121, 115 unterbrochen ist und kein elektrischer Strom über den jeweiligen Schalter 105, 121, 115 fließen kann. Der erste, zweite und dritte Schalter 105, 121, 115 können durchgeschaltet sein, sodass eine elektrische Verbindung über den jeweiligen Schalter 105, 121, 115 möglich ist und ein elektrischer Strom über den jeweiligen Schalter 105, 121, 115 fließen kann.

Der Spannungswandler 107 und/oder der weitere Spannungswandler 123 können einen aktiven Zustand aufweisen, in welchem ein elektrischer Strom über den jeweiligen Spannungswandler 107, 123 fließt. Stromstärke und Spannung der von dem jeweiligen Spannungswandler 107, 123 transportierten elektrischen Energie kann von der Steuerung 109 steuerbar sein.

Der Spannungswandler 107 und/oder der weitere Spannungswandler 123 können einen inaktiven Zustand aufweisen, in welchem kein elektrischer Strom über den jeweiligen Spannungswandler 107, 123 fließt. Die Steuerung 109 kann ausgebildet sein den Zustand des jeweiligen Spannungswandlers 107, 123 zwischen aktiv und passiv umzuschalten.

Der Energiespeicher 113 kann geladen sein, insbesondere vollständig geladen sein, falls das weitere Spannungsmessgerät 131 einen Spannungswert misst, welcher oberhalb eines Ladespannungsgrenzwerts des Energiespeichers 113 liegt. Die Menge an in dem Energiespeicher gespeicherter elektrischer Energie kann proportional zu der über den Energiespeicher 113 abfallenden elektrischen Spannung sein. Der Energiespeicher 113 kann mit elektrischer Energie geladen werden, falls das weitere Spannungsmessgerät 131 einen Spannungswert misst, welcher unterhalb eines Ladespannungsgrenzwerts des Energiespeichers 113 liegt.

Eine Stromstärke eines elektrischen Stroms kann oberhalb des Stromstärkegrenzwertes liegen, sodass ein Überstrom fließt. Dieser Überstrom kann insbesondere durch das Strommessgerät 125 erfasst werden.

Entsprechend der in Fig. 1 gezeigten Merkmale der USV 100 sind folgende Betriebsmodi der USV 100 möglich:
Während eines Einschaltvorgangs der USV 100 kann der dritte Schalter 115 durchgeschaltet sein, der erste Schalter 105 kann den elektrischen Stromfluss über den ersten Strompfad 101 unterbrechen und der zweite Schalter 121 kann den Stromfluss über den vierten Strompfad 117 unterbrechen. Der Spannungswandler 107 kann einen elektrischen Einschaltstrom begrenzen und von der Steuereinheit 109 gesteuert werden. Der weitere Spannungswandler 123 ist inaktiv.

Ein Netzbetrieb der USV 100 ist dadurch gekennzeichnet, dass die USV 100 mit elektrischer Energie aus einem Versorgungsnetz über den Versorgungsnetzanschluss 111 versorgt wird.

Während des Netzbetriebs kann der Energiespeicher 113 vollständig aufgeladen sein und das Strommessgerät 125 erfasst keinen Überstrom. Der erste Schalter 105 und der dritte Schalter 115 können durchgeschaltet sein und der zweite Schalter 121 kann sperren. Sowohl der Spannungswandler 107 als auch der weitere Spannungswandler 123 können inaktiv sein.

Während des Netzbetriebs kann der USV-interne Energiespeicher 113 vollständig aufgeladen sein und durch das Strommessgerät 125 wird ein Überstrom erfasst. Der dritte Schalter 115 kann durchgeschaltet sein und der erste Schalter 105 und der zweite Schalter 121 können sperren. Der weitere Spannungswandler 123 kann inaktiv sein. Der Spannungswandler 107 wird von der Steuereinheit 109 gesteuert und kann elektrische Energie von dem Versorgungsnetzanschluss 111 zu dem elektrischen Verbraucher transportieren. Der Spannungswandler 107 wird der Art von der Steuereinheit 109 gesteuert, dass der zu dem elektrischen Verbraucher fließende elektrische Strom begrenzt sein kann.

Während des Netzbetriebs kann der Energiespeicher 113 geladen werden und durch das Strommessgerät 125 wird kein Überstrom erfasst. Der dritte Schalter 115 und der erste Schalter 105 können durchgeschaltet sein und der zweite Schalter 121 kann sperren. Der Spannungswandler 107 kann inaktiv sein. Der weitere Spannungswandler 123 wird der Art von der Steuereinheit 109 gesteuert, dass der Energiespeicher 113 über den Versorgungsnetzanschluss 111 mit elektrischer Energie versorgt wird, sodass der Energiespeicher 113 elektrisch geladen werden kann.

Während des Netzbetriebs kann der Energiespeicher 113 geladen werden und durch das Strommessgerät 125 wird ein Überstrom erfasst. Der dritte Schalter 115 kann durchgeschaltet sein und der erste Schalter 105 und der zweite Schalter 121 können sperren. Der Spannungswandler 107 ist aktiv und kann elektrische Energie vom Versorgungsnetzanschluss 111 zu dem elektrischen Verbraucher transportieren, wobei der Spannungswandler 107 von der Steuereinheit 109 gesteuert wird, sodass der durch den Spannungswandler 107 fließende elektrische Strom gesteuert werden kann, insbesondere begrenzt werden kann. Der weitere Spannungswandler 123 kann aktiv sein, wird von der Steuereinheit 109 gesteuert und kann elektrische Energie von dem Versorgungsnetzanschluss 111 zu dem Energiespeicher 113 transportieren.

Ein USV-Betrieb der USV 100 ist dadurch gekennzeichnet, dass die USV 100 einen elektrischen Verbraucher mit elektrischer Energie aus dem Energiespeicher 113 versorgt. Ein Wechsel von dem Netzbetrieb in den USV-Betrieb wird durch die Steuereinheit 109 gesteuert und kann beispielsweise erfolgen, wenn über den Versorgungsnetzanschluss 111 keine elektrische Energie an die USV 100 geliefert wird.

Während des USV-Betriebs wird durch das Strommessgerät 125 kein Überstrom erfasst. Der erste Schalter 105 und der zweite Schalter 121 können durchgeschaltet sein und der dritte Schalter 115 kann sperren. Der Spannungswandler 107 und der weitere Spannungswandler 123 sind inaktiv. Dadurch kann der Energiespeicher 113 elektrische Energie zu dem elektrischen Verbraucher transportieren.

Während des USV-Betriebs wird durch das Strommessgerät 125 ein Überstrom erfasst. Der zweite Schalter 121 kann durchgeschaltet sein und der erste Schalter 105 und der dritte Schalter 115 können sperren. Der weitere Gleichspannungswandler 123 ist inaktiv. Der Spannungswandler 107 ist aktiv und kann elektrische Energie von dem Energiespeicher 113 zu dem elektrischen Verbraucher transportieren, wobei der Spannungswandler 107 von der Steuerung 109 gesteuert wird, insbesondere so gesteuert wird, dass die Stromstärke eines elektrischen Stroms, welcher zu dem Verbraucher fließt durch den Spannungswandler 107 begrenzt werden kann.

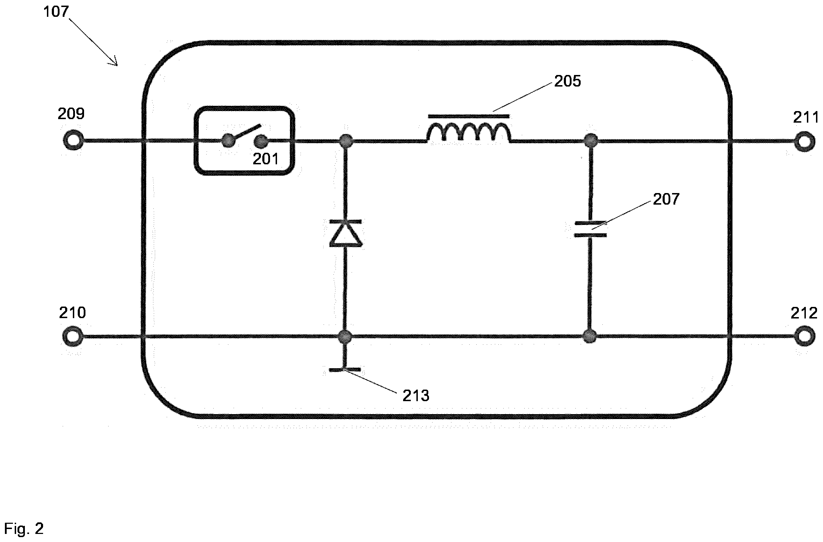

Fig. 2 zeigt eine schematische Darstellung des Spannungswandlers 107, welcher aus einem Wandlerschalter 201, einer Diode 203, einer elektromagnetischen Spule 205 und einem Kondensator 207 gebildet sein kann. Weiterhin weist der Spannungswandler 107 zwei Eingangskontakte 209, 210 und zwei Ausgangskontakte 211, 212 und einen elektrischen Anschluss mit Bezugspotential 213 auf.

Die in Fig. 2 gezeigte Ausführungsform realisiert einen für Gleichspannung ausgelegten Tiefsetzsteller, welcher dem elektrischen Verbraucher eine geringere elektrische Spannung als eine dem Tiefsetzsteller von dem Versorgungsnetzanschluss 111 oder dem Energiespeicher 113 bereitgestellte elektrische Spannung bereitstellen kann. Durch die geringere elektrische Spannung kann auch der durch den elektrischen Verbraucher fließende elektrische Strom in der Stromstärke begrenzt sein.

### Bezugszeichenliste

- 100: Unterbrechungsfreie Stromversorgung (USV)
- 101: Erster Strompfad
- 103: Zweiter Strompfad
- 105: Erster Schalter
- 107: Spannungswandler
- 109: Steuerung
- 111: Versorgungsnetzanschluss
- 113: Energiespeicher
- 115: Dritter Schalter
- 117: Dritter Strompfad
- 119: Vierter Strompfad
- 121: Zweiter Schalter
- 123: Spannungswandler
- 125: Strommessgerät
- 127: Spannungsmessgerät
- 129: Anschluss mit elektrischem Bezugspotential
- 131: Weiteres Spannungsmessgerät
- 133: Elektrischer Kontakt
- 201: Wandlerschalter
- 203: Diode
- 205: Elektromagnetische Spule
- 207: Kondensator
- 209: Eingangskontakt
- 210: Eingangskontakt
- 211: Ausgangskontakt
- 212: Ausgangskontakt
- 213: Anschluss mit elektrischem Bezugspotential

## Patentansprüche

1. Unterbrechungsfreie Stromversorgung, USV, (100) für einen elektrischen Verbraucher, mit
einem ersten Strompfad (101) und einem zweiten Strompfad (103), welche ausgebildet sind, den elektrischen Verbraucher mit elektrischer Energie zu versorgen;
einem ersten Schalter (105), welcher ausgebildet ist, den ersten Strompfad (101) zu unterbrechen;
einem Spannungswandler (107) zur Begrenzung einer Stromstärke eines elektrischen Stroms, wobei der Spannungswandler (107) in dem zweiten Strompfad (103) angeordnet ist; und
einer Steuerung (109), welche ausgebildet ist, bei Erreichung eines Stromstärkegrenzwertes des elektrischen Stroms in dem ersten Strompfad (103) den ersten Schalter (105) zu öffnen, um den ersten Strompfad (101) elektrisch zu unterbrechen und den elektrischen Strom zur Strombegrenzung über den Spannungswandler (107) zu führen,
wobei der erste Schalter (105) elektrisch parallel zu dem Spannungswandler (107) angeordnet ist, und
wobei der Spannungswandler (107) ein Tiefsetzsteller zur Spannungsreduktion ist,
**dadurch gekennzeichnet, dass** der Spannungswandler (107) ausgebildet ist, die Stromstärke des elektrischen Stroms anzupassen, sodass der elektrische Strom mit einer Stromstärke unterhalb des Stromstärkegrenzwertes durch den zweiten Strompfad und/oder den elektrischen Verbraucher fließbar ist.

2. Unterbrechungsfreie Stromversorgung (100) nach Anspruch 1, wobei der erste Schalter (105) in dem ersten Strompfad (101) angeordnet ist.

3. Unterbrechungsfreie Stromversorgung (100) nach einem der vorstehenden Ansprüche, wobei der erste Strompfad (101) und der zweite Strompfad (103) parallel geschaltet sind.

4. Unterbrechungsfreie Stromversorgung (100) nach einem der vorstehenden Ansprüche, wobei die Steuerung (109) ausgebildet ist, den ersten Schalter (105) bei Unterschreitung des Stromstärkegrenzwertes zu schließen, um den ersten Strompfad (101) in die Energieversorgung einzubinden.

5. Unterbrechungsfreie Stromversorgung (100) nach einem der vorstehenden Ansprüche, wobei der Spannungswandler (107) ein Gleichspannungswandler ist.

6. Unterbrechungsfreie Stromversorgung (100) nach einem der vorstehenden Ansprüche, wobei der erste Schalter (105) einen oder eine Mehrzahl von Metall-Oxid-Feldeffekt-Halbleiter-Feldeffekttransistor (MOSFET) oder mindestens ein Relais umfasst.

7. Unterbrechungsfreie Stromversorgung (100) nach einem der vorstehenden Ansprüche, wobei die unterbrechungsfreie Stromversorgung (100) zumindest eine Energiequelle (111, 113), insbesondere einen Versorgungsnetzanschluss (111) und/oder einen Energiespeicher (113), zur elektrischen Energieversorgung des Verbrauchers aufweist, wobei der erste Strompfad (101) und der zweite Strompfad (103) mit der Energiequelle (111, 113), insbesondere mittels des ersten Schalters (105), verbindbaroder verbunden sind.

8. Unterbrechungsfreie Stromversorgung (100) nach Anspruch 7, wobei die Energiequelle (113) ein Energiespeicher (113) ist,
mit einem dritten Strompfad (117) und einem vierten Strompfad (119), welche parallel zueinander geschaltet und ausgebildet sind, den ersten Strompfad (101) und den zweiten Strompfad (103) mit dem Energiespeicher (113) zu verbinden, wobei der dritte Strompfad (117) und der vierte Strompfad (119) mit dem ersten Strompfad (101) und dem zweiten Strompfad (103) elektrisch verbunden, insbesondere dem ersten Strompfad (101) und dem zweiten Strompfad (103) vorgeschaltet sind, wobei der Energiespeicher (113) mit dem dritten Strompfad (117) und dem vierten Strompfad (119) elektrisch verbunden ist;
mit einem weiteren Spannungswandler (123) zur Begrenzung einer Stromstärke eines elektrischen Stroms, wobei der weitere Spannungswandler (123) in dem vierten Strompfad (119) angeordnet ist; und
einem zweiten Schalter (121), welcher ausgebildet ist, den dritten Strompfad (117) zu schließen und/oder zu öffnen; wobei
die Steuerung (109), ausgebildet ist, den zweiten Schalter (121) zu schließen, um den elektrischen Verbraucher mit dem Energiespeicher (113) zu verbinden.

9. Unterbrechungsfreie Stromversorgung (100) nach Anspruch 8, wobei der weitere Spannungswandler (123) elektrisch parallel zu dem zweiten Schalter (121) angeordnet ist.

10. Unterbrechungsfreie Stromversorgung (100) nach einem der vorstehenden Ansprüche 8 oder 9, wobei die Steuerung (109) ausgebildet ist, bei Erreichung eines Entladegrenzwertes des Energiespeichers (113) den weiteren Spannungswandler (123) anzusteuern, um den Energiespeicher (113) über den weiteren Spannungswandler (123) mit elektrischer Energie zu versorgen.

11. Unterbrechungsfreie Stromversorgung (100) nach einem der vorstehenden Ansprüche 8 bis 10, wobei die Steuerung (109) ausgebildet ist, den zweiten Schalter (121) zu schließen, um elektrischen Strom über den dritten Strompfad (117) zu dem elektrischen Verbraucher zu leiten.

12. Unterbrechungsfreie Stromversorgung (100) nach einem der vorstehenden Ansprüche, welche einen dritten Schalter (115) aufweist, welcher den Strompfaden (101, 103, 117, 119) elektrisch vorgeschaltet ist, um die Strompfade (101, 103, 117, 119) schaltbar mit einer Energiequelle, insbesondere mit einem Versorgungsanschluss (111) zu verbinden.

13. Unterbrechungsfreie Stromversorgung (100) nach einem der vorstehenden Ansprüche, welche ferner ein Strommessgerät (125) zur Messung der Stromstärke des elektrischen Stroms aufweist.

14. Unterbrechungsfreie Stromversorgung (100) nach Anspruch 13, wobei das Strommessgerät dem ersten Schalter (105) elektrisch nachgeschaltet oder vorgeschaltet ist.

## Claims

1. An uninterruptable power supply (U PS) (100) for an electrical consumer, comprising
a first current path (101) and a second current path (103), which are configured to supply the electrical consumer with electrical energy;
a first switch (105), which is configured to interrupt the first current path (101);
a voltage converter (107) for limiting a current intensity of an electrical current, wherein the voltage converter (107) is arranged in the second current path (103); and
a controller (109), which is configured to open the first switch (105) when a current intensity limit value of the electrical current in the first current path (103) is reached in order to electrically interrupt the first current path (101) and conduct the electrical current over the voltage converter (107) in order to limit the current,
wherein the first switch (105) is electrically arranged in parallel to the voltage converter (107), and
wherein the voltage converter (107) is a step-down converter for voltage reduction,
**characterized in that** the voltage converter (107) is configured to adjust the current intensity of the electrical current, so that the electrical current can flow through the second current path and/or the electrical consumer with a current intensity below the current intensity limit value.

2. The uninterruptible power supply (100) according to claim 1, wherein the first switch (105) is arranged in the first current path (101).

3. The uninterruptible power supply (100) according to one of the preceding claims, wherein the first current path (101) and the second current path (103) are switched in parallel.

4. The uninterruptible power supply (100) according to one of the preceding claims, wherein the controller (109) is configured to close the first switch (105) when the current intensity falls below the current intensity limit value, in order to incorporate the first current path (101) in the energy supply.

5. The uninterruptible power supply (100) according to one of the preceding claims, wherein the voltage converter (107) is a DC voltage converter.

6. The uninterruptible power supply (100) according to one of the preceding claims, wherein the first switch (105) comprises one or a plurality of metal-oxide-semiconductor field-effect transistors (MOSFET) or at least one relay.

7. The uninterruptible power supply (100) according to one of the preceding claims, wherein the uninterruptible power supply (100) comprises at least one energy source (111, 113), in particular a supply network connection (111) and/or an energy storage (113), for supplying electrical energy to the consumer, wherein the first current path (101) and the second current path (103) are connected or can be connected to the energy source (111, 113), in particular by means of the first switch (105).

8. The uninterruptible power supply (100) according to claim 7, wherein the energy source (113) is an energy storage (113),
comprising a third current path (117) and a fourth current path (119), which are switched in parallel to one another and are configured to connect the first current path (101) and the second current path (103) with the energy storage (113), wherein the third current path (117) and the fourth current path (119) are electrically connected with the first current path (101) and the second current path (103), in particular are arranged upstream of the first current path (101) and the second current path (103), wherein the energy storage (113) is electrically connected with the third current path (117) and the fourth current path (119);
comprising a further voltage converter (123) for limiting a current intensity of an electrical current, wherein the further voltage converter (123) is arranged in the fourth current path (119); and
a second switch (121), which is configured to close and/or open the third current path (117); wherein
the controller (109) is configured to close the second switch (121) in order to connect the electrical consumer with the energy storage (113).

9. The uninterruptible power supply (100) according to claim 8, wherein the further voltage converter (123) is electrically arranged in parallel to the second switch (121).

10. The uninterruptible power supply (100) according to one of the preceding claims 8 or 9, wherein the controller (109) is configured to control the further voltage converter (123) when a discharge limit value of the energy storage (113) is reached, in order to supply the energy storage (113) with electrical energy via the further voltage converter (123).

11. The uninterruptible power supply (100) according to one of the preceding claims 8 to 10, wherein the controller (109) is configured to close the second switch (121) in order to conduct electrical current to the electrical consumer via the third current path (117).

12. The uninterruptible power supply (100) according to one of the preceding claims, which comprises a third switch (115), which is electrically connected upstream of the current paths (101, 103, 117, 119) in order to switchably connect the current paths (101, 103, 117, 119) with an energy source, in particular a supply connection (111).

13. The uninterruptible power supply (100) according to one of the preceding claims, further comprising a current measurement device (125) for measuring the current intensity of the electrical current.

14. The uninterruptible power supply (100) according to claim 13, wherein the current measurement device is electrically connected downstream or upstream of the first switch (105).

## Revendications

1. Alimentation sans interruption, USV, (100) pour un consommateur électrique, comprenant
un premier trajet de courant (101) et un deuxième trajet de courant (103), qui sont configurés pour alimenter le consommateur électrique en énergie électrique;
un premier commutateur (105), qui est configuré pour interrompre le premier trajet de courant (101);
un transformateur de tension (107) pour limiter une intensité de courant d'un courant électrique, dans lequel le transformateur de tension (107) est agencé dans le second trajet de courant (103); et
un contrôleur (109), qui est configuré pour ouvrir le premier interrupteur (105) lorsqu'une valeur limite d'intensité de courant du courant électrique dans le premier trajet de courant (103) est atteinte afin d'interrompre électriquement le premier trajet de courant (101) et conduire le courant électrique sur le transformateur de tension (107) afin de limiter le courant,
dans lequel le premier commutateur (105) est agencé électriquement en parallèle avec le transformateur de tension (107), et
dans lequel le transformateur de tension (107) est un convertisseur abaisseur pour la réduction de tension,
**caractérisé en ce que** le transformateur de tension (107) est configuré pour ajuster l'intensité de courant du courant électrique, de sorte que le courant électrique peut circuler à travers le deuxième chemin de courant et/ou le consommateur électrique avec une intensité de courant inférieure à la valeur limite d'intensité de courant.

2. Alimentation sans interruption (100) selon la revendication 1, dans laquelle le premier commutateur (105) est agencé dans le premier chemin de courant (101).

3. Alimentation sans interruption (100) selon l'une des revendications précédentes, dans laquelle le premier trajet de courant (101) et le deuxième trajet de courant (103) sont commutés en parallèle.

4. Alimentation sans interruption (100) selon l'une des revendications précédentes, dans laquelle le contrôleur (109) est configuré pour fermer le premier interrupteur (105) lorsque l'intensité du courant tombe en dessous de la valeur limite d'intensité du courant, afin d'incorporer le premier courant chemin (101) dans l'alimentation en énergie.

5. Alimentation sans interruption (100) selon l'une des revendications précédentes, dans laquelle le transformateur de tension (107) est un transformateur de tension continue.

6. Alimentation sans interruption (100) selon l'une des revendications précédentes, dans laquelle le premier commutateur (105) comprend un ou plusieurs transistors à effet de champ métal-oxyde-semi-conducteur (MOSFET) ou au moins un relais.

7. Alimentation sans interruption (100) selon l'une des revendications précédentes, dans laquelle l'alimentation sans interruption (100) comprend au moins une source d'énergie (111, 113), en particulier une connexion au réseau d'alimentation (111) et/ou un accumulateur d'énergie (113), pour fournir de l'énergie électrique au consommateur, dans lequel le premier trajet de courant (101) et le deuxième trajet de courant (103) sont reliés ou peuvent être reliés à la source d'énergie (111, 113), en particulier au moyen du premier interrupteur (105).

8. Alimentation sans interruption (100) selon la revendication 7, dans laquelle la source d'énergie (113) est un accumulateur d'énergie (113),
comprenant un troisième trajet de courant (117) et un quatrième trajet de courant (119), qui sont commutés en parallèle l'un par rapport à l'autre et sont configurés pour connecter le premier trajet de courant (101) et le deuxième trajet de courant (103) avec le stockage d'énergie (113), dans lequel le troisième trajet de courant (117) et le quatrième trajet de courant (119) sont reliés électriquement au premier trajet de courant (101) et au deuxième trajet de courant (103), en particulier sont disposés en amont du premier trajet de courant (101) et le deuxième trajet de courant (103), dans lequel le stockage d'énergie (113) est connecté électriquement au troisième trajet de courant (117) et au quatrième trajet de courant (119);
comprenant un autre transformateur de tension (123) pour limiter une intensité de courant d'un courant électrique, dans lequel l'autre transformateur de tension (123) est agencé dans le quatrième chemin de courant (119); et
un deuxième commutateur (121), qui est configuré pour fermer et/ou ouvrir le troisième trajet de courant (117); où
le contrôleur (109) est configuré pour fermer le deuxième interrupteur (121) afin de connecter le consommateur électrique au stockage d'énergie (113).

9. Alimentation sans interruption (100) selon la revendication 8, dans laquelle l'autre transformateur de tension (123) est électriquement agencé en parallèle avec le deuxième commutateur (121).

10. Alimentation sans interruption (100) selon l'une des revendications précédentes 8 ou 9, dans laquelle le contrôleur (109) est configuré pour commander l'autre transformateur de tension (123) lorsqu'une valeur limite de décharge du stockage d'énergie (113) est atteinte, pour alimenter l'accumulateur d'énergie (113) en énergie électrique via l'autre transformateur de tension (123).

11. Alimentation sans interruption (100) selon l'une des revendications précédentes 8 à 10, dans laquelle le contrôleur (109) est configuré pour fermer le deuxième interrupteur (121) afin de conduire le courant électrique vers le consommateur électrique via le troisième chemin de courant (117).

12. Alimentation sans interruption (100) selon l'une des revendications précédentes, qui comprend un troisième interrupteur (115), qui est connecté électriquement en amont des chemins de courant (101, 103, 117, 119) afin de connecter de façon commutable les chemins de courant (101, 103, 117, 119) avec une source d'énergie, notamment une connexion d'alimentation (111).

13. Alimentation sans interruption (100) selon l'une des revendications précédentes, comprenant en outre un dispositif de mesure de courant (125) pour mesurer l'intensité du courant électrique.

14. Alimentation sans interruption (100) selon la revendication 13, dans laquelle le dispositif de mesure de courant est connecté électriquement en aval ou en amont du premier interrupteur (105).
